# EUROPÄISCHE PATENTANMELDUNG

(11) **EP 2 088 337 A2**
(43) Veröffentlichungstag der Anmeldung: **12.08.2009**
(21) Anmeldenummer: 09001712.0
(22) Anmeldetag: 06.02.2009
(51) Int. Cl.: F16B 7/04

(54) **Profil und Profilsystem**

(30) Priorität: 11.02.2008 DE 102008008696
(71) Anmelder: Dorma GmbH + CO. KG, 58256 Ennepetal (DE)
(72) Erfinder: Finke, Andreas, 58285 Gevelsberg (DE); Kloßas, Jens, 45739 Oer-Erkenschwick (DE)

(57) **Zusammenfassung**

Ein Profil (10) ist offenbart, das einen Anbringabschnitt (11) aufweist. Der Anbringabschnitt (11) umfasst eine Basis (11a) und zwei Wandabschnitte (11b, 11 b). Die Wandabschnitte (11 b, 11 b) gehen von der ersten Basis (11a) und erstrecken sich in eine Richtung (+z). Ein so zwischen der Basis (11a) und den Wandabschnitten (11 b, 11 b) gebildeter Innenraum des Profils (10) weist eine im Querschnitt unrunde Innenkontur auf. Die Wandabschnitte (11b, 11b) weisen an ihren freien Enden Abschnitte (11c, 11 c) auf, die von den freien Enden der Wandabschnitten (11 b, 11 b) abgehend einander zugewandt sind.

Ferner ist ein Profilsystem offenbart, das zumindest ein erstes Profil (10) und zumindest ein zweites Profil (30, 40) umfasst. Das zweite Profil (30, 40) weist Anbringabschnitt (31, 41). Der Anbringabschnitt (31, 41) umfasst eine Basis (31 a, 41 a) und zumindest einen Profilverbinder (50, 60, 70). Der Profilverbinder (50, 60, 70) selbst weist eine Basis (51, 61, 71) und zumindest zwei elastisch verformbare Vorsprünge (52, 52; 62, 62; 72, 72) auf, die von der Basis (51, 61, 71) abgehen und sich in eine selbe Richtung (+x) erstrecken. Im Montagezustand sind die Vorsprünge (52, 52; 62, 62; 72, 72) in den Anbringabschnitt (11) des ersten Profils (10) eingeschoben und verspannen sich gegen Innenflächen dieses Anbringabschnitts (11). Der Profilverbinder (50, 60, 70) stößt mit der Basis (51, 61, 71) an dem ersten Profil (10) an. Das zweite Profil (30, 40) ist an der ersten Basis (51, 61, 71) des Profilverbinders (50, 60, 70) ortsfest angebracht.

## Beschreibung

Die Erfindung betrifft Profile sowie ein damit ausgestattetes Profilsystem.

Bei Rahmenflügeln, beispielsweise bei mit Rahmen versehenen Glasflügeltüren, ist ein umlaufender Rahmen vorgesehen, in dem beispielsweise eine Glasscheibe eingesetzt ist. Solch ein umlaufender Rahmen wird üblicherweise aus in der Regel vier stangenförmigen Profilen zusammengesetzt. Die Stangenform erlaubt eine preisgünstige Herstellung der Profile.

Allerdings ist die Montage solch eines Rahmenflügels schwierig. Üblicherweise werden die Profile mittels Winkeln aneinander befestigt. Dies bedingt, dass die zu verbindenden Profile zunächst präzise positioniert werden müssen, bevor der Befestigungswinkel montiert werden kann. Dies findet beispielsweise mittels Spannbändern statt, die die Profile fixieren.

Solch eine Montageweise ist sehr aufwendig und fehlerbehaftet, da nur minimale Positionsabweichungen der Profile zueinander eine Neuausrichtung der Profilrahmen erforderlich macht.

Aus der DE 20 2007 008 969 U1 ist ein Profilsystem bekannt, gemäß dem drei Profile an einer Ecke miteinander verbunden werden können. Ein winkelförmiger Nutstein ist jeweils in eine Stirnseite von zwei miteinander zu verbindenden Profilen eingeschoben und mittels Schrauben im jeweiligen Profil verspannt. Die betreffenden Stirnseiten der beiden Profile erstrecken sich derart in einem Winkel von 45°, dass die beiden Profile im Montagezustand einen rechten Winkel einschließen. Aus dem Nutstein steht ein Gewindestift von den Profilen weg weisend hervor. Auf den Gewindestift wird das erste Profil aufgeschraubt. Um die ersten zwei beschriebenen Profile zu verspannen, weisen deren Stirnseiten eine sehr komplexe Form auf, was die Herstellung teuer macht. Ungünstig ist zudem, dass die Nuten zur Aufnahme des Nutsteins im Falle beispielsweise einer Schiebetür in Richtung einer Person sichtbar sind, was aus ästhetischen Gründen zumeist nicht wünschenswert ist.

Der Erfindung liegt daher die Aufgabe zugrunde, flexibel einsetzbare Profile mit einfachem Aufbau sowie ein Profilsystem zu schaffen, das eine einfache Montage derartiger Profile ermöglicht. Der Erfindung liegt ferner die Aufgabe zugrunde, ein einfaches Montageverfahren bereitzustellen, mittels dessen die Profile montiert werden können.

Diese Aufgabe wird durch den Gegenstand der Ansprüche 1, 6, 12 und 20 gelöst. Vorteilhafte Weiterbildungen der Erfindung sind in den Unteransprüchen angegeben.

Ein erfindungsgemäßes Profil weist einen ersten Anbringabschnitt auf. Der Anbringabschnitt seinerseits umfasst eine Basis und zwei erste Wandabschnitte, die von der ersten Basis abgehen und sich in eine erste Richtung erstrecken. Ein so zwischen der Basis und den ersten Wandabschnitten gebildeter Innenraum des Profils hat eine im Querschnitt unrunde Innenkontur. Die unrunde Innenkontur ermöglicht ein drehfestes Einsetzen eines anderen Teils in das Profil, ohne dass zwangsläufig zusätzliche Befestigungsmittel, wie Befestigungsschrauben, erforderlich sind.

Die ersten Wandabschnitte weisen an ihren freien Enden Abschnitte auf, die von den freien Enden der ersten Wandabschnitten abgehend einander zugewandt ausgebildet sind. Diese Endabschnitte ermöglichen ein Befestigen eines Teils mittels Hintergreifens der Endabschnitte.

Das Profil weist ferner zumindest einen Innenwandabschnitt auf, der ebenfalls von der Basis abgeht und sich im Wesentlichen in die angegebene erste Richtung erstreckt. Dieser zumindest eine Innenwandabschnitt ist im Innenraum des Profils zu den ersten Wandabschnitten jeweils im Abstand angeordnet. Der Innenwandabschnitt bietet die Möglichkeit, zwischen ihm und einem jeweiligen ersten Wandabschnitt ein Teil einzusetzen bzw. einzuschieben und ggf. zu verspannen. Zusätzlich kann der Innenwandabschnitt in Bezug auf das Einsetzen eines Teils aus Richtung der Endabschnitte der ersten Wandabschnitte her als Abstützfläche dienen, was die Anbringung besagten Teils am Profil erleichtert.

Vorzugsweise erstreckt sich der zumindest eine Innenwandabschnitt über eine gesamte Länge des Profils. Dies ermöglicht eine freie Positionierbarkeit eines jeweiligen anzubringenden Teils hinsichtlich der Längserstreckung des Profils. Zudem kann das Profil, wenn sich auch alle anderen Bestandteile des Profils über die gesamte Länge des Profils erstrecken, als Strangpress- bzw. Stranggussteil hergestellt und entsprechend abgelängt werden, was zu einer sehr einfachen und kostengünstigen Herstellung führt.

Das Profil kann ferner zumindest einen Kanal aufweisen, der in bzw. an der Basis ausgebildet ist und sich von einer Stirnseite des Profils parallel zu der Längserstreckung des Profils erstreckt. Dieser Kanal ermöglicht beispielsweise ein Einschrauben einer Schraube zum Befestigen oder Verspannen eines anzubringenden Teils am bzw. im Profil. Die Erstreckung von einer Stirnseite her ermöglicht ferner ein einfaches Anbringen des Teils an besagter Profil-Stirnseite.

Vorzugsweise erstreckt sich der zumindest eine Kanal ebenfalls über die gesamte Länge des Profils, was zu den bereits genannten Vorteilen führt.

Zusätzlich weist das Profil vorzugsweise ferner einen Aufnahmeabschnitt auf. Der Aufnahmeabschnitt umfasst zwei zweite Wandabschnitte, die von der ersten Basis abgehen und sich in eine zu der ersten Richtung entgegengesetzte Richtung erstrecken. Der Aufnahmeabschnitt dient dem Aufnehmen eines anderen Teils, wie beispielsweise eines Glasflügels einer Schiebetür.

Ein erfindungsgemäßes Profilsystem umfasst zumindest ein erstes Profil der vorbeschriebenen und zumindest ein zweites Profil. Das zumindest eine zweite Profil weist einen zweiten Anbringabschnitt auf. Der zweite Anbringabschnitt umfasst eine zweite Basis und zwei erste Wandabschnitte. Die ersten Wandabschnitte gehen von der zweiten Basis ab und erstrecken sich in eine zweite Richtung. Der zweite Anbringabschnitt dient einem Anbringen des zweiten Profils an einem jeweiligen ersten Profil.

Das erfindungsgemäße Profilsystem umfasst ferner zumindest einen Profilverbinder. Jeder Profilverbinder weist eine Basis und zumindest zwei elastisch verformbare Vorsprünge auf, die von der ersten Basis abgehen und sich in eine selbe Richtung erstrecken. Im Montagezustand sind die zumindest zwei Vorsprünge in den Anbringabschnitt des zumindest einen ersten Profils eingeschoben und verspannen sich gegen korrespondierende Flächen dieses Anbringabschnitts. Dies erfolgt erfindungsgemäß im Wesentlichen dadurch, dass die Vorsprünge beim Einschieben in das jeweilige erste Profil verformt werden und gegen Innenflächen bzw. -seiten des ersten Profils drücken. Der zumindest eine Profilverbinder stößt mit der Basis an dem zumindest einen ersten Profil an. Das zumindest eine zweite Profil ist an der Basis des zumindest einen Profilverbinders ortsfest angebracht. Das erfindungsgemäße Profilsystem erlaubt somit eine sehr einfache Montage, ohne dass Hilfsmittel zum genauen Positionieren der einzelnen Teile erforderlich sind.

Vorzugsweise umfasst der zweite Anbringabschnitt ferner zweite Wandabschnitte, die ebenfalls von der zweiten Basis abgehen und sich in eine zu der zweiten Richtung entgegengesetzten Richtung erstrecken. Diese zweiten Wandabschnitte bilden mit der zweiten Basis einen zweiten Aufnahmeabschnitt. Dieser zweite Aufnahmeabschnitt dient dem Anbringen von Teilen am jeweiligen zweiten Profil.

Vorzugsweise umfasst das erfindungsgemäße Profilsystem ferner ein Befestigungsteil, das dem Befestigen des zumindest einen zweiten Profils an dem zumindest einen ersten Profil dient. Ferner weist dieses zweite Profil einen ersten Abringabschnitt auf, der einem Anbringen des zweiten Anbringabschnitts an dem Befestigungsteil dient.

Der zumindest eine Profilverbinder weist vorzugsweise zumindest eine Durchgangsöffnung auf, die sich entlang einer Erstreckungsrichtung der zumindest dessen zweier Vorsprünge erstreckt. Die Durchgangsöffnungen ermöglichen es, eine Schraube einzuschrauben und damit die beiden Vorsprünge aufzubereiten und im jeweiligen Profil zu verspannen.

Vorzugsweise weist die zweite Basis des zumindest einen zweiten Profils ebenfalls zumindest eine Durchgangsöffnung auf. Die jeweilige Durchgangsöffnung fluchtet im Montagezustand mit einer der zumindest einen Durchgangsöffnung eines jeweiligen Profilverbinders. Die Durchgangsöffnungen erlauben, jeweils eine Schraube einzuschrauben, um ein jeweiliges zweites Profil am ersten Profil anzubringen. Damit ergeben sich folgende Montageschritte:
- Einsetzen des Profilverbinders in ein erstes Profil
- Anschrauben eines zweiten Profils am Profilverbinder.

D. h. bevor das zweite Profil angebracht wird, sind Profilverbinder und erstes Profil montiert. Dadurch ist es nicht notwendig, das erste und das zweite Profil einander auszurichten, bevor sie miteinander montiert werden können. Dies führt zu einer einfachen Montage.

Die Durchgangsöffnungen des zumindest einen zweiten Profils haben vorzugsweise einen Querschnitt in Form eines Kreises, Langlochs oder im Wesentlichen einer 8. Weisen die Durchgangsöffnungen im zweiten Profil die Form eines Langlochs oder einer 8 auf, kann die Lage des zweiten Profils im Bezug auf das erste Profil leicht variiert werden. Damit ist eine einfache Anpassung der Profile in Bezug auf deren Positionierung zueinander gegeben.

Das erste Profil kann ebenfalls gemäß dem vorbeschriebenen zweiten Profil ausgebildet sein.

Vorzugsweise umfasst das Profilsystem ferner zumindest ein Sicherungsteil. Jedes Sicherungsteil hat einen Anbringabschnitt, der einem Befestigen des jeweiligen Sicherungsteils an einem jeweiligen Profil dient. Ferner hat es einen Aufliege- oder Sperrabschnitt, der an dem Anbringabschnitt angebracht oder mit diesem einstückig ausgebildet. Eine dem Anbringabschnitt abgewandte erste Fläche des Sperrabschnitts verläuft in einem vorbestimmten, spitzen Winkel zu einer der ersten Fläche im Wesentlichen entgegengesetzt gerichteten, dem zumindest einen ersten Profil zugewandten, zweiten Fläche des Befestigungsabschnitts. Der Sperrabschnitt ist ferner elastisch in einem vorbestimmten Maß auf den Anbringabschnitt zu und von ihm weg bewegbar ausgebildet.

Das Sicherungsteil erlaubt das Aufschieben des zumindest einen zweiten Profils auf ein jeweiliges anderes Profil des Profilsystems über das Sicherungsteil hinweg. In der Aufschieberichtung entgegengesetzten Richtung wirkt das Sicherungsteil sperrend. In dieses entgegengesetzte Richtung kann das zweite Profil nicht oder nur unter sehr großem Kraftaufwand unter Gefahr einer Zerstörung des Sicherungsteils oder des aufgeschobenen Profils geschoben werden. Insbesondere bei senkrecht verlaufenden ersten Profilen hat dies Vorteile, da das Sicherungsteil als Herausfallschutz genutzt werden kann. Die Sperrwirkung nur in eine Richtung ermöglicht ferner das Herausnehmen des zweiten Profils aus dem ersten Profil. Das Sicherungsteil hat den Vorteil, universell bei allen vorbeschriebenen Profilen einsetzbar zu sein.

Das Profilsystem kann zusätzlich zumindest ein zweites Profil gemäß einem der vorbeschriebenen Profilsysteme aufweisen.

Das erfindungsgemäße Profilsystem kann ferner zumindest ein drittes Profil umfassen. Das zumindest eine dritte Profil ist im Montagezustand in das zumindest eine zweite Profil eingeklipst oder auf dieses aufgeschoben. Zwischen dem zumindest einem zweiten Profil und dem zumindest einem dritten Profil besteht ein Hohlraum. Das Profilsystem umfasst ferner zumindest eines der vorbeschriebenen Sicherungsteile. Ein jeweiliges Sicherungsteil ist in dem Hohlraum derart angeordnet, dass es zum einen mit dem Anbringabschnitt an dem zumindest einen zweiten Profil anliegt und zum anderen mit dem Sperrabschnitt das zumindest eine dritte Profil von dem zumindest einen zweiten Profil mit einer vorbestimmten Vorspannung weg drückt. Die erste Fläche des Anbringabschnitts des zumindest einen ersten Sicherungsteils ist derart ausgerichtet, dass sie in Richtung einer Sicherung des zumindest einen dritten Profils in Richtung jeweiliges zweites Profil geneigt ist. Diese Ausbildung der Neigung führt zu einer Widerhakenform des Sicherungsteils, was auf einfache Weise die vorbeschriebene Sperrwirkung lediglich in eine Richtung bewirkt.

Das Profilsystem umfasst vorzugsweise zumindest ein zweites Sicherungsteil gemäß der vorbeschriebenen Art. Das zumindest eine zweite Sicherungsteil ist derart im Hohlraum zwischen den beiden jeweiligen Profilen angeordnet, dass die erste Fläche des Anbringabschnitts des zumindest einen zweiten Sicherungsteils derart ausgerichtet ist, dass sie entgegen der Sicherungsrichtung des jeweiligen dritten Profils in Richtung jeweiliges zweites Profil geneigt ist. D. h. dieses Profilsystem ist derart erweitert, dass nunmehr alle Paare aneinander befestigter Profile mittels Sicherungsteilen gesichert werden können.

Bei dem Profilsystem weisen, im Querschnitt gesehen, die Wandabschnitte des zumindest einen zweiten Profils an der Basis abgewandten Enden vorzugsweise jeweils eine Führung auf. Jede Führung erstreckt sich entlang einer Längserstreckung des zumindest einen zweiten Profils. Beide Führungen haben über ihre gemeinsame Länge zueinander einen nahezu konstanten Abstand. Das zumindest eine dritte Profil weist einen Einsatzabschnitt auf, der zu den Führungen vorzugsweise komplementär ausgebildete Abschnitte umfasst. Damit ist das zumindest eine dritte Profil mit den Abschnitten in die Führungen eingeschoben und steht mit ihnen in Berührungskontakt. Das jeweilige dritte Profil weist einen Abdeckabschnitt auf, der an den der Basis abgewandten Enden der Wandabschnitte des zweiten Profils anliegt und damit das das zumindest eine zweite Profil abdeckt. Damit ist eine einfache und wirksame Abdeckung des zweiten Profils nach außen geschaffen, was einen Schutz vor Verletzungen einerseits und vor Verschmutzung von Innenräumen zusammengesetzter Profile bietet.

Vorzugsweise weist jedes der vorbeschriebenen Profilsysteme für jede Verbindung zwischen zwei Profilen jeweils einen der vorbeschriebenen Profilverbinder auf. Damit sind vollständig geschlossene Rahmen, beispielsweise Rahmen für Glastürflügel, auf einfache Weise herstellbar.

Weitere Merkmale und Vorteile der Erfindung ergeben sich aus der nachfolgenden Beschreibung bevorzugter Ausführungsformen.

Es zeigen:
- Figur 1: ein erstes Profil, im Querschnitt, zur Verwendung bei einem Profilsystem gemäß einer Ausführungsform der Erfindung,
- Figur 2: das Profil von Figur 1 in verschiedenen Anwendungen,
- Figur 3: ein zweites Profil zur Verwendung bei dem Profilsystem ge- mäß der Ausführungsform der Erfindung in verschiedenen Anwendungen,
- Figur 4: eine Abwandlung des zweiten Profils von Figur 3,
- Figur 5: ein Abschlussprofil für das Profilsystem gemäß der Ausführungsform der Erfindung,
- Figur 6: einen Profilverbinder gemäß einer ersten Ausführungsform der Erfindung,
- Figur 7: einen Profilverbinder gemäß einer zweiten Ausführungsform der Erfindung,
- Figur 8: einen Profilverbinder gemäß einer dritten Ausführungsform der Erfindung,
- Figur 9: eine erste Verbindung zwischen einem ersten Profil und einem zweiten Profil,
- Figur 10: eine zweite Verbindung zwischen einem ersten Profil sowie einem zweiten Profil und
- Figur 11: eine Schiebetüranlage im Schnitt unter Nutzung des Profilsystems gemäß der Ausführungsform der Erfindung.

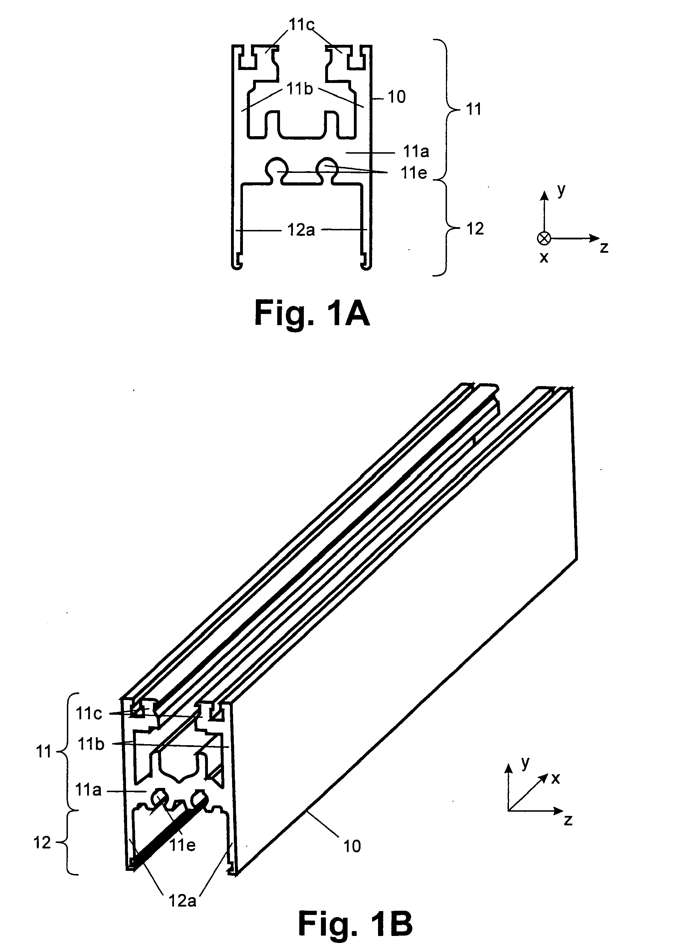

Figur 1A zeigt ein erstes Profil 10 gemäß einer Ausführungsform der Erfindung. Das erste Profil 10 weist eine Basis 11a eines Anbringabschnitts 11 auf. Von der Basis 11a erstrecken sich zwei Wandabschnitte 11 b, 11 b in +y-Koordinatenrichtung in Figur 1A. Die beiden Wandabschnitte 11 b, 11 b und die Basis 11a umschließen in Längsrichtung des ersten Profils 10 einen Raum, der den Anbringabschnitt 11 bildet und dem Anbringen anderer Teile dient. Ferner erstrecken sich von der Basis 11a zwei Wandabschnitte 12a, 12a in eine zu den Wandabschnitten 11 b, 11 b entgegengesetzte Richtung. Somit umschließen die Basis 11a und die Wandabschnitte 12a, 12a einen zweiten Raum, der einen Aufnahmeabschnitt 12 bildet und einem Anbringen beispielsweise eines nicht dargestellten Glasflügels dient.

In der Basis 11 a sind vorzugsweise zwei Schraubkanäle 11 e, 11 e ausgebildet, die sich in Längsrichtung des Profils 10 erstrecken.

Die Wandabschnitte 11 b, 11 b weisen an ihren freien Enden Abschnitte 11c, 11c auf, die sich aufeinander zu, d. h. in ±z-Koordinatenrichtung in Figur 1A, erstrecken.

Figur 1B zeigt das erste Profil 10 von Figur 1A in einer perspektivischen Ansicht mit einer etwas veränderten Form der Basis 11a.

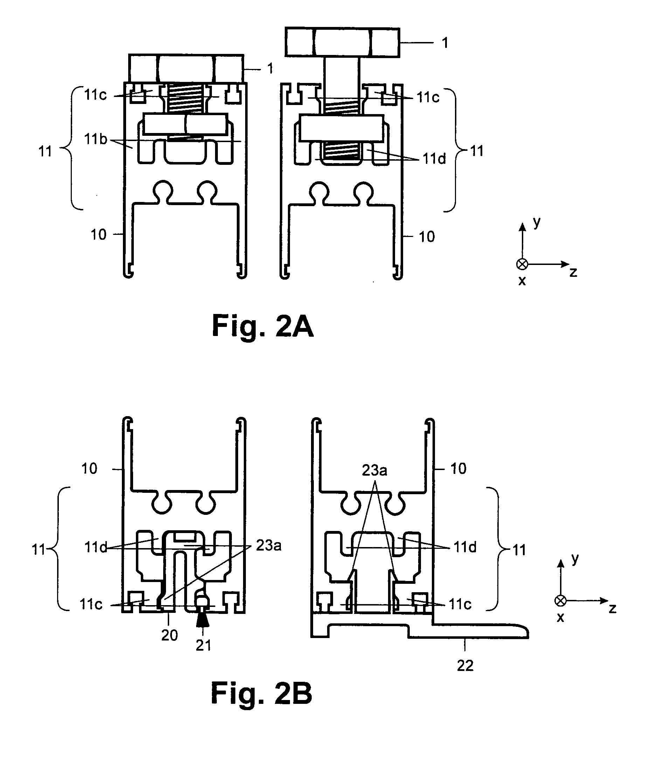

Links in Figur 2A ist beispielhaft gezeigt, wie eine Schraube 1 an dem Anbringabschnitt 11 des ersten Profils 10 befestigt sein kann. Eine Mutter ist so zwischen den Wandabschnitten 11 b, 11 b gehalten, dass sie in Bezug auf das erste Profil 10 drehfest angeordnet ist. Zur besseren Montage ist die Mutter zwischen den Wandabschnitten 11 b, 11 b eingeklemmt. Von oben ist die Schraube 1 in die Mutter eingeschraubt und drückt die Mutter gegen abwärts weisende Flächen der Endabschnitte 11 c, 11c.

Rechts in Figur 2A ist eine andere Art von Schraubbefestigung gezeigt. Die hier dargestellte Mutter weist eine Höhenabmessung auf, die einem Abstand zweier Innenwandabschnitte 11 d, 11 d zu unteren Randabschnitten der Endabschnitte 11c entspricht. D. h. die Schraube 1 dient in diesem Fall nicht zwangsläufig dem verklemmen mit dem Profil 10.

Die in Figur 2A gezeigten Schraubverbindungen sind lediglich exemplarisch. Die Schraube 1 kann beispielsweise durch einen Laufwagen, an dem das erste Profil 10 als Teil eines Schiebetürflügels aufgehängt ist, oder durch einen Mitnehmer ersetzt sein. Es können allerdings viele andere Teile angebracht werden, wie beispielsweise ein Läufer eines Linearmotors.

Figur 2B zeigt zwei Anwendungen, bei denen ein jeweiliges Teil in den Anbringabschnitt 11 des ersten Profils 10 eingesetzt ist, ohne mit diesem verschraubt zu sein. Links in Figur 2B ist das erste Profil 10 mit seinem Anbringabschnitt 11 auf ein Führungsprofil 20 gesetzt. Das Führungsprofil 20 kann beispielsweise Teil einer nicht dargestellten Bodenschiene sein. Das Führungsprofil 20 ist ferner mit einer Bürstendichtung 21 versehen, die sich von dem Anbringabschnitt 11 weg erstreckt. Im in Figur 2B gezeigten Beispiel ist die Bürstendichtung 21 zwischen Führungsprofil 20 und erstes Profil 10 geklemmt.

Das Führungsprofil 20 ist mittels eines Befestigungsabschnitts 23a zwischen den Innenwandabschnitten 11 d, 11 d gehalten. Das Führungsprofil 20 hat in einem unteren Abschnitt einen Vorsprung, der in eine Ausnehmung des linken Endabschnitte 11 c eingreift. Die Bürstendichtung 21 ist zwischen Führungsprofil 20 und rechtem Endabschnitt 11 c eingeklemmt.

Rechts in Figur 2B ist das erste Profil 10 im Falle der Verwendung als Teil eines feststehenden Flügels gezeigt. Das erste Profil 10 ist in eine Bodenschiene 22 geklipst. Die Anbringung des ersten Profils 10 an der Bodenschiene 22 erfolgt mittels der Endabschnitte 11 c, 11 c. Ein Befestigungsabschnitt 23a der Bodenschiene 22 ist mittels zweier hervorstehender Rastnasen gebildet, die der Bodenschiene 22 abgewandte Flächen der Endabschnitte 11 c, 11 c hintergreifen.

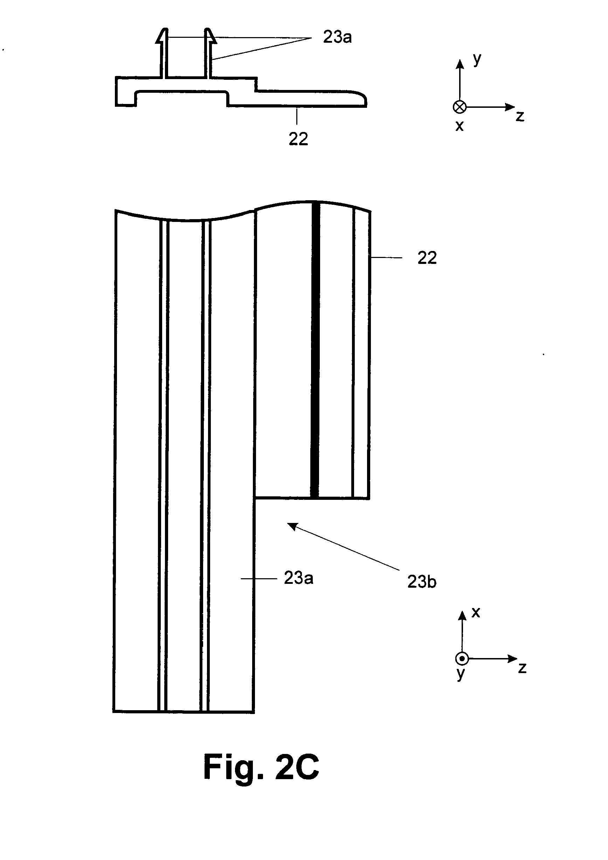

Figur 2C zeigt die Bodenschiene 22 von Figur 2B in zwei Ansichten, einmal von vorne und einmal von oben. Die Bodenschiene 22 kann an einem Endabschnitt 23a einen Ausschnitt 23b aufweisen.

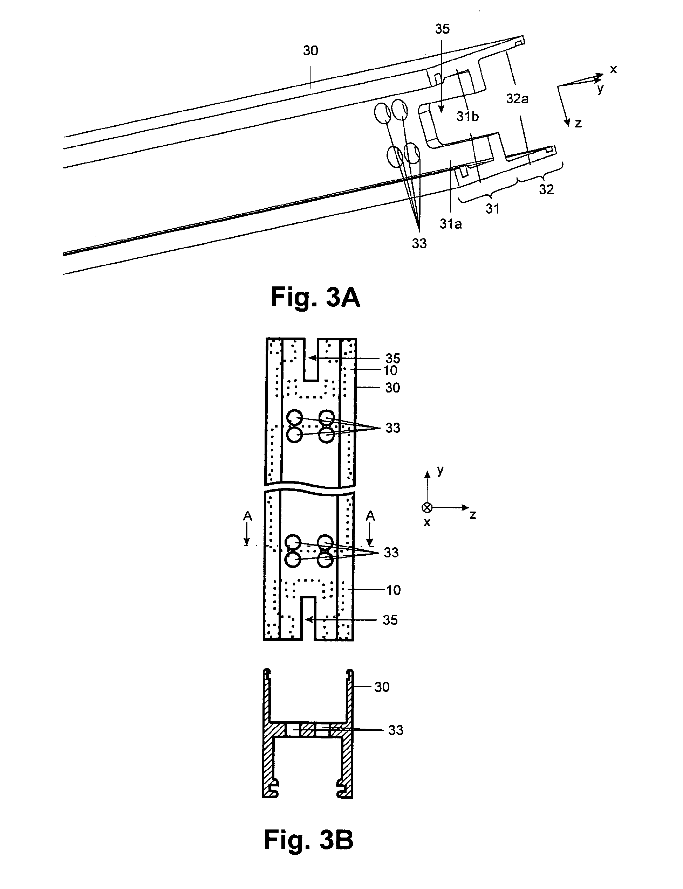

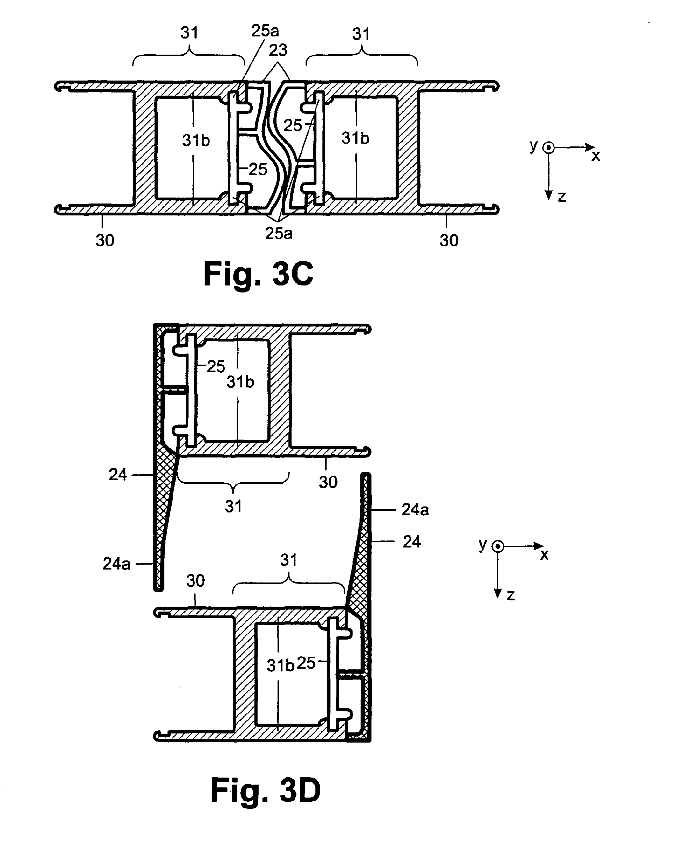

Figur 3 zeigt ein zweites Profil 30 gemäß einer Ausführungsform der Erfindung. Das zweite Profil 30 findet in Verbindung mit dem ersten Profil 10 bei einem Profilsystem gemäß einer Ausführungsform der Erfindung Verwendung.

Das zweite Profil 30 umfasst analog zum ersten Profil 10 einen Anbringabschnitt 31 und einen Aufnahmeabschnitt 32. Beide Abschnitte 31, 32 werden mittels einer Basis 31a voneinander separiert. Der Anbringabschnitt 31 ist mittels der Basis 31 a sowie davon abgehenden Wandabschnitten 31 b, 31 b gebildet. Der Aufnahmeabschnitt 32 ist mittels der Basis 31 a sowie davon abgehenden Wandabschnitten 32a, 32a gebildet.

Die Basis 31 a weist zumindest an einer Stirnseite des zweiten Profils 30 eine Ausnehmung 35 auf. Die Ausnehmung 35 dient einem Einschieben beispielsweise des Führungsprofils 20 oder der Bodenschiene 22 von Figur 2B. Ferner sind in der Basis 31 a Durchgangsöffnungen 33 derart ausgebildet, dass im Montagezustand ein jeweiliges Paar von Durchgangsöffnungen 33, 33 mit den Schraubkanälen 11 e, 11 e eines jeweiligen ersten Profils 10 fluchtet.

Figur 3B zeigt das zweite Profil 30 in einer Ansicht von oben und im Schnitt entlang einer Schnittlinie A - A oben in Figur 3B. Zudem sind oben in Figur 3B zwei erste Profile 10, 10 in Bezug auf deren Anordnung hinsichtlich des zweiten Profile 30 angedeutet dargestellt.

Figur 3C zeigt die Verwendung zweier zweiter Profile 30, 30 in dem Fall, bei dem sie einander gegenüberliegend angeordnet sind. Die zweiten Profile 30, 30 bilden jeweils einen Teil eines Flügels. Die zweiten Profile 30, 30 sind so angeordnet, dass deren Anbringabschnitte 31, 31 einander zugewandt sind. Zum Abdichten eines Zwischenraums zwischen diesen zwei Profilen 30, 30 sind Mitteldichtungsprofile 23, 23 vorgesehen. Jedes Mitteldichtungsprofil 23 ist mittels eines Befestigungsteils 25 an dem jeweiligen zweiten Profil 30 angebracht. Befestigungsabschnitte 25a in Form von Vorsprüngen greifen in Ausnehmungen an Enden jeweiliger Wandabschnitte 31 b, 31 b ein.

Figur 3D zeigt eine andere Anwendung zweier zweiter Profile 30, 30. Anstelle von Mitteldichtungsprofilen 23, 23 ist an jedem zweiten Profil 30 ein Seitendichtungsprofil 24 mittels wiederum eines Befestigungsteils 25 angebracht. Jedes Seitendichtungsprofils 24 weist eine Dichtungslippe 24a. auf, die sich in ±z-Koordinatenrichtung in Figur 3D erstreckt. Im in Figur 3D gezeigten Beispiel dichten zwei Seitendichtungsprofile 24 die beiden zweiten Profile 30, 30 zueinander ab.

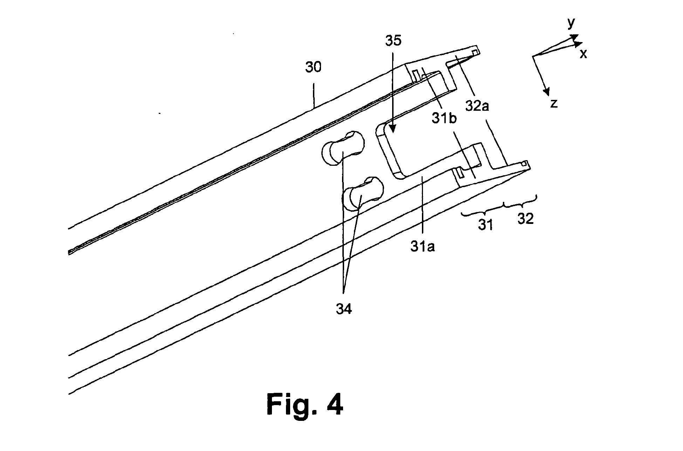

Figur 4 zeigt eine Abwandlung des zweiten Profils 30 von Figur 3A Im Gegensatz zu mehreren, im Querschnitt im Wesentlichen kreisrunden Durchgangsöffnungen 33, 33, 33, 33 sind in der Basis 31 a an entsprechenden Stellen im Querschnitt im Wesentlichen 8-förmige Durchgangsöffnungen 34, 34 ausgebildet, die sich entlang einer Längserstreckung des Profils 30 erstrecken. Dies bietet eine höhere Flexibilität beim Ausrichten des zweiten Profils 30 in Bezug auf ein erstes Profil 10, da mehr als zwei Anbringpositionen vorhanden sind. Es können somit Toleranzen bei jeweils anzubringenden ersten Profilen 10 ausgeglichen werden.

Ferner können derartige Durchgangsöffnungen 34, 34 anstelle mittels Bohrens einfach mittels Stanzens hergestellt werden, was schnell vonstatten geht und kostengünstig ist.

Anstelle des im Wesentlichen 8-förmigen Querschnitts können die Durchgangsöffnungen 34, 34 beispielsweise auch die Form jeweils eines Langlochs haben.

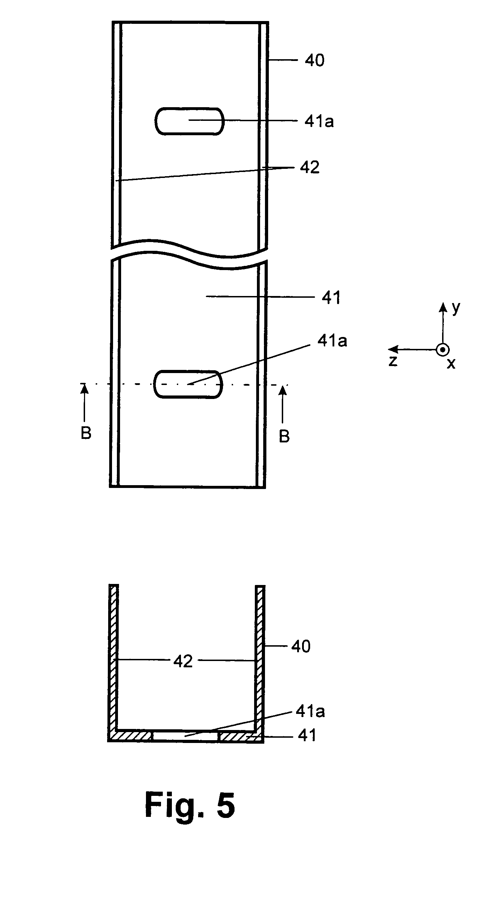

Figur 5 zeigt ein Abschlussprofil 40, einmal von vorne und einmal entlang einer Schnittlinie B - B oben in Figur 5. Das Abschlussprofil 40 ist vorgesehen, mit Schenkeln 42, 42 auf ein jeweiliges erstes oder zweites Profil 10, 30 aufgesetzt zu werden. Das Abschlussprofil 40 weist ferner eine Basis 41 auf, die die Schenkel 42, 42 jeweils an einem Ende miteinander verbindet. In der Basis 41 sind Befestigungsöffnungen 41 a, 41 a vorgesehen, die einem Anbringen des Abschlussprofils 40 beispielsweise an einer nicht dargestellten Wand dienen.

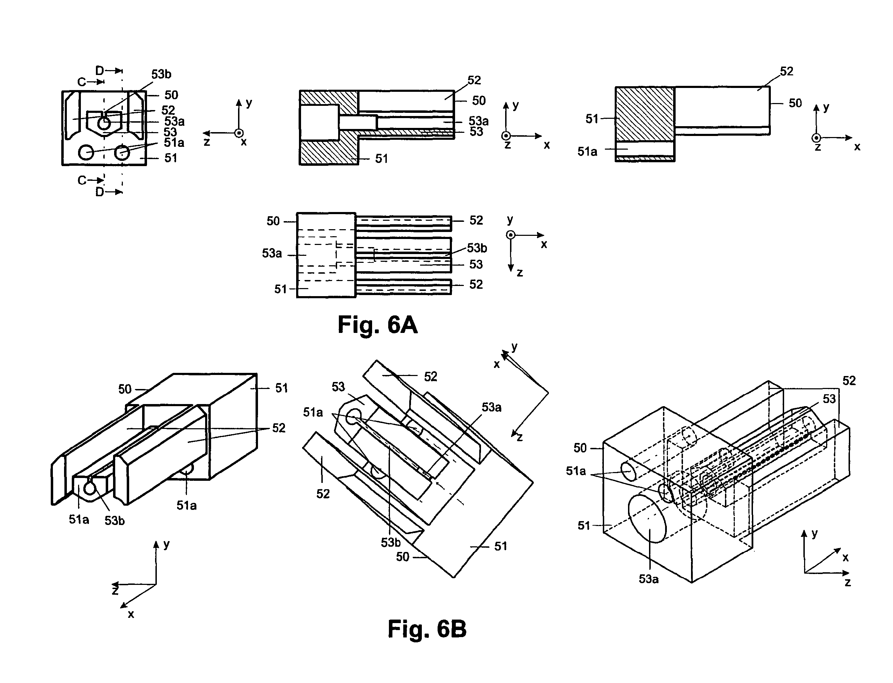

Figur 6A zeigt einen Profilverbinder 50 gemäß einer ersten Ausführungsform der Erfindung in verschiedenen Ansichten. Links in Figur 6A ist eine Vorderansicht des Profilverbinders 50 gezeigt. Oben in der Mitte ist der Profilverbinder 50 entlang einer Schnittlinie C - C links in Figur 6A dargestellt, wohingegen rechts in Figur 6A der Profilverbinder 50 entlang einer Schnittlinie D - D links in Figur 6A dargestellt ist. Im unteren Teil von Figur 6A ist der Profilverbinder 50 von oben gezeigt. Figur 6B zeigt den Profilverbinder 50 in verschiedenen perspektivischen Ansichten.

Der Profilverbinder 50 umfasst eine Basis 51, die vorzugsweise blockförmig ausgebildet ist. An einer Seite der Basis 51 sind Vorsprünge 52, 52 angeformt, die zueinander im Wesentlichen parallel verlaufen und einen vorbestimmten Abstand aufweisen. Die Vorsprünge 52, 52 sind vorgesehen, in einen jeweiligen Zwischenraum eines ersten Profils 10 eingeschoben zu werden, der mittels eines Wandabschnitts 11 b der Basis 11a und eines Innenwandabschnitts 11d des jeweiligen Profils 10 gebildet ist (vgl. Figur 1 A). Die Vorsprünge 52, 52 sind vorzugsweise so geformt, dass sie sich im jeweiligen Zwischenraum verklemmen. Im einfachsten Fall erfolgt dies dadurch, dass die Vorsprünge 52, 52 Querabmessungen aufweisen oder zueinander einen derartigen Abstand haben, die bzw. der jeweils größer sind oder ist als jeweilige Innenabmessungen des jeweiligen Zwischenraums. Die Vorsprünge 52, 52 sind elastisch ausgebildet.

Alternativ oder zusätzlich weist der Profilverbinder 50 einen Vorsprung 53 auf, der ebenfalls an einer Seite der Basis 51 angeformt ist.

Im Falle der zusätzlichen Ausbildung ist der Vorsprung 53 zwischen den Vorsprüngen 52, 52 im Abstand zu diesen angeordnet. Der Vorsprung 53 ist an derselben Seite der Basis 51 angeformt, an der auch die Vorsprünge 52, 52 angeformt sind, und erstreckt sich im Wesentlichen parallel zu den Vorsprüngen 52, 52. Der Vorsprung 53 wird bei einem Einsetzen des Profilverbinders 50 in das erste Profil 10 in einem Zwischenraum eingeschoben, der mittels Innenwandabschnitten 11 d, 11 d und der Basis 11a gebildet ist. Der Vorsprung 53 kann sich analog zu den Vorsprüngen 52, 52 in diesem Zwischenraum mit dem ersten Profil 10 verklemmen.

Alternativ oder zusätzlich weist der Vorsprung 53 zumindest einen Schlitz 53b auf, der sich entlang vorzugsweise einer Gesamtlänge des Vorsprungs 53 erstreckt. Der Vorsprung 53 weist ferner mittig eine Durchgangsöffnung 53a auf, die sich, im Querschnitt gesehen, an den Schlitz 53b anschließt. D. h. der Schlitz 53b und die Durchgangsöffnung 53a sind miteinander verbunden. Die Durchgangsöffnung 53a dient dem Einschrauben einer nicht dargestellten Schraube. Beim Einschrauben einer Schraube werden die mittels des Schlitzes 53b gebildeten freien Endabschnitte des Vorsprungs 53, im Querschnitt gesehen, auseinander gedrückt und somit mit Innenwandabschnitten 11 b, 11 b eines jeweiligen ersten Profils 10 verspannt.

Aufgrund der Vorsprünge 52, 53 wird der Profilverbinder 50 somit im ersten Profil 10 verdrehsicher und vorzugsweise herausfallsicher aufgenommen und gegebenenfalls mit diesem verklemmt bzw. verspannt, sodass der Profilverbinder 50 mit dem ersten Profil 10 eine feste Verbindung eingeht. Profilverbinder 50 und erstes Profil 10 bilden somit ein Befestigungsteil für ein jeweiliges zweites Profil 30.

Die Durchgangsöffnung 53a erstreckt sich zudem durch die Basis 51 hindurch. Dadurch ist es möglich, eine Schraube von einer Seite der Basis 51 einzuschrauben, die den Vorsprüngen 52, 53 abgewandt ist. An dieser abgewandten Seite der Basis 51 hat die Durchgangsöffnung 53a vorzugsweise einen größeren Durchmesser als im Bereich des Vorsprungs 53. Dadurch ist es möglich, die Schraube komplett mit Kopf im Profilverbinder 50, d. h. in der Basis 51, zu versenken. Damit steht der Schraubenkopf nach dem Einschrauben nicht störend aus der Basis 51 hervor.

In der Basis 51 sind vorzugsweise ferner Durchgangsöffnungen 51 a, 51 a entsprechend einer Anzahl von Schraubkanälen 11 e, 11 e im ersten Profil 10 ausgebildet. Die Durchgangsöffnungen 51 a, 51 a sind so ausgebildet, dass sie nach dem Einsetzen des Profilverbinders 50 in ein jeweiliges erstes Profil 10 mit den Schraubkanälen 11 e, 11 e fluchten.

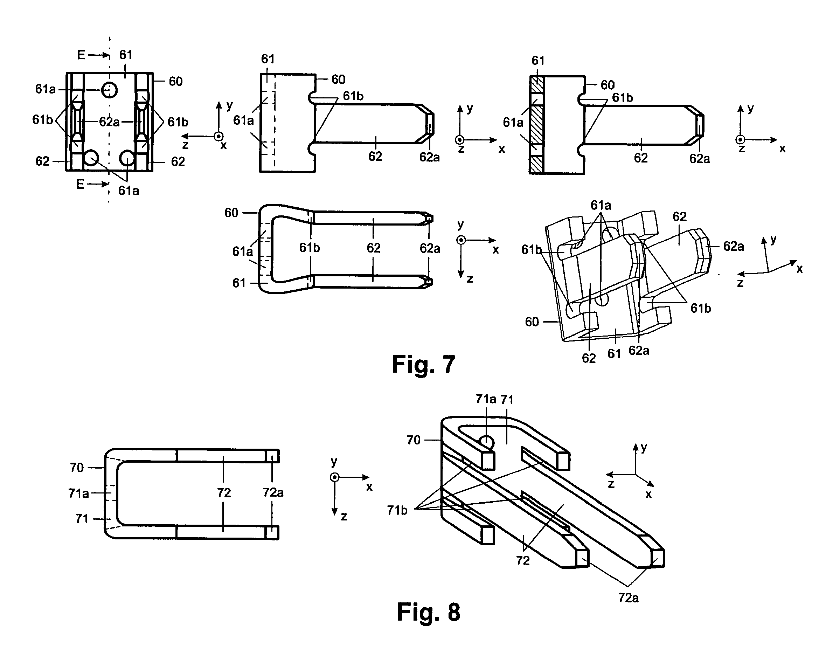

Figur 7 zeigt einen Profilverbinder 60 gemäß einer zweiten Ausführungsform der Erfindung in verschiedenen Ansichten. Links in Figur 7 ist eine Vorderansicht des Profilverbinders 60 gezeigt. Oben in der Mitte ist der Profilverbinder 60 in einer Seitenansicht gezeigt, wohingegen rechts oben in Figur 7 der Profilverbinder 60 entlang einer Schnittlinie E - E links in Figur 7 dargestellt ist. Unten mittig in Figur 7 ist der Profilverbinder 60 von oben gezeigt. Rechts unten zeigt Figur 7 den Profilverbinder 60 in einer perspektivischen Ansicht.

Der Profilverbinder 60 weist eine Basis 61 auf, die relativ flach ausgebildet ist. Die Basis 61 weist einen Mittenabschnitt auf, der im Wesentlichen ebene Außenflächen aufweist. An zwei gegenüberliegenden Seiten des Mittenabschnitts schließen sich zwei Schenkelabschnitte an, die derart gebogen ausgebildet sind, dass sie sich zunächst voneinander weg erstrecken und nachfolgend aufeinander zu verlaufen. Vorsprünge 62, 62 schließen sich an die Schenkelabschnitte an und weisen vorzugsweise eine selbe Länge auf. Jeder Vorsprung 62 weist vorzugsweise an seinem freien Ende einen Einführungsabschnitt 62a auf. Jeder Einführungsabschnitt 62a ist vorzugsweise konisch derart ausgebildet, sodass ein Einschieben des Profilverbinders 60 in ein erstes Profil 10 leichter vonstatten geht. Die konische Form kann mittels vorzugsweise ebener Schrägflächen, die insbesondere unten rechts in Figur 7 zu erkennen sind, oder auch mittels konvex gekrümmter Außenflächen gebildet sein. Die Vorsprünge 62, 62 können ähnlich dem Profilverbinder 50 aus elastischem Material gebildet sein, sodass sie sich mit dem jeweiligen ersten Profil 10 verklemmen bzw. verspannen. Das Verklemmen erfolgt vorteilhafterweise dadurch, dass die Vorsprünge 62, 62 aufgrund des ersten Profils 10 zusammengedrückt oder auseinander gedrückt werden. Rückstellkräfte des elastischen Materials führen zum Verspannen des Profilverbinders 60 im ersten Profil 10.

Die Basis 61 weist ähnlich dem Profilverbinder 50 an jeweiligen Stellen Durchgangsöffnungen 61 a, 61 a, 61 a auf. Die links in Figur 7 unten angeordneten Durchgangsöffnungen 61a, 61 a haben die gleiche Funktion wie die Durchgangsöffnungen 51 a, 51 a des vorstehend beschriebenen Profilverbinders 50. Die obere Durchgangsöffnung 61 a hat die gleiche Funktion wie die vorbeschriebene Durchgangsöffnung 53a.

Vorteilhafterweise weisen die Vorsprünge 62, 62 eine geringere Höhe als die Basis 61 auf. In den Bereichen, in denen die Vorsprünge 62, 62 an der Basis 61 angeformt sind, weist die Basis 61 beidseitig des jeweiligen Vorsprungs 62 vorzugsweise jeweils eine Ausnehmung 61 b auf. Bei einem Einschieben in ein erstes Profil 10 kommt die Basis 61 mit ihren diesem ersten Profil 10 zugewandten Flächen mit ebenjenem Profil 10 zur Anlage. D. h. Flächen der Basis 61 stoßen gegen eine Stirnfläche bzw. -seite des ersten Profils 10. Im Anformungsbereich der Vorsprünge 62, 62 weist die Stirnseite des ersten Profils 10 somit zwangsläufig Ecken auf. Diese Ecken können beispielsweise Grate aufweisen oder nicht präzise rechtwinklig ausgebildet sein. Derartige Ungenauigkeiten können mittels der Ausnehmungen 61 b, 61 b, 61 b, 61 b in gewissem Maße ausgeglichen werden, was zu einer größeren Fehlertoleranz des Profilverbinders 60 führt.

Figur 8 zeigt einen Profilverbinder 70 gemäß einer dritten Ausführungsform der Erfindung. Er ist ähnlich dem Profilverbinder 60 ausgebildet. Anstelle von Ausnehmungen 61 b, 61 b, 61 b, 61 b sind Schlitze 71 b, 71 b, 71 b, 71 b ausgebildet. Im Vergleich zu einer entsprechenden Ausnehmung 61 b erstreckt sich ein jeweiliger Schlitz 71b wesentlich tiefer in eine Basis 71 des Profilverbinders 70 hinein. Analog zum Profilverbinder 60 sind Durchgangsöffnungen 71 a sowie Vorsprünge 72, 72 ausgebildet. Jeder Vorsprung 72 weist an seinem freien Ende einer Einführungsabschnitt 72a auf. Im Gegensatz zum Profilverbinder 60 gehen Schenkelabschnitte der Basis 71 und die Vorsprünge 72, 72 jeweils nahezu im rechten Winkel von einem Mittenabschnitt der Basis 71 ab und verlaufen zueinander parallel. Ein Verspannen des Profilverbinders 70 erfolgt analog dem Profilverbinder 60.

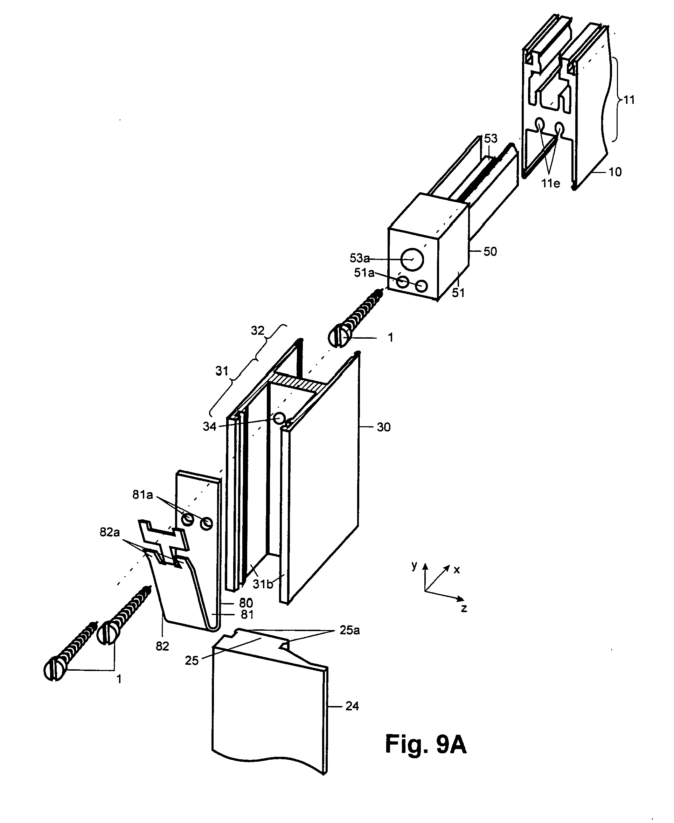

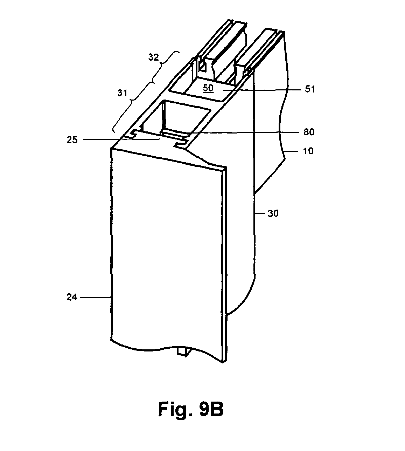

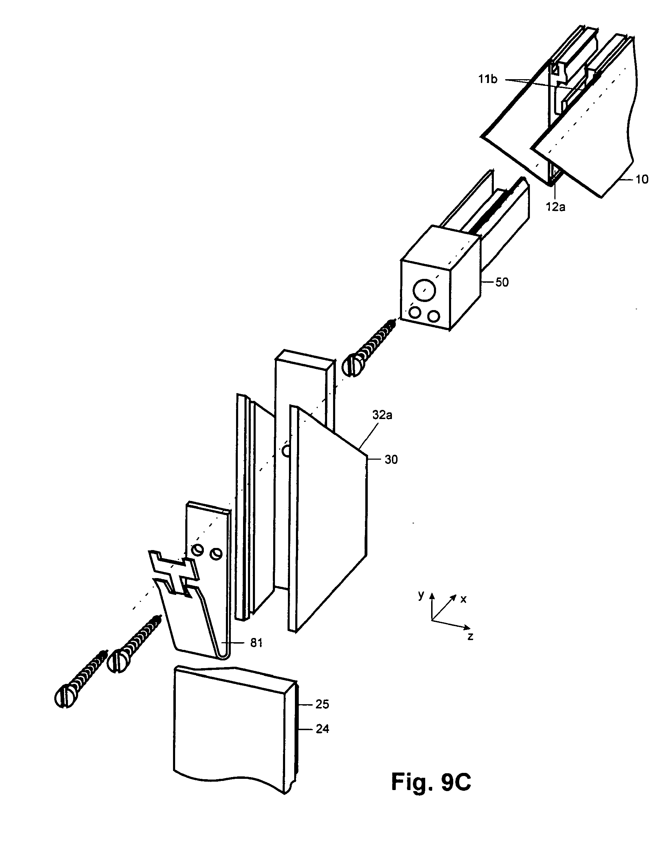

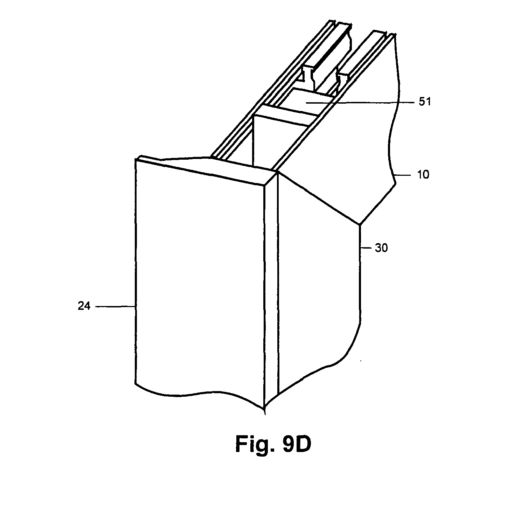

Figur 9 zeigt exemplarisch für den Profilverbinder 50 das Verbinden eines ersten Profils 10 mittels des Profilverbinders 50 mit einem zweiten Profil 30 in einem oberen Bereich eines Rahmens für beispielsweise einen Glas-Türflügel. Der Profilverbinder 50 wird in einem ersten Schritt stimseitig in das erste Profil 10 eingeschoben.

Vorteilhafterweise verspannt sich der Profilverbinder 50 bereits in einem vorbestimmten Maß mit dem ersten Profil 10, sodass in einem nachfolgenden Schritt das zweite Profil 30 mit seinem Aufnahmeabschnitt 32 in einem Winkel von vorzugsweise 90° zum ersten Profil 10 auf die Basis 51 des Profilverbinders 50 aufgeschoben werden kann, ohne die Gefahr einzugehen, dass sich der Profilverbinder 50 vom ersten Profil 10 lösen könnte.

Alternativ wird eine erste, in Figur 9A mittig dargestellte Schraube 1 durch die Durchgangsöffnung 53a hindurch in den Vorsprung 53 eingeschraubt, woraufhin sich der Vorsprung 53 aufspreizt und den Profilverbinder 50 im ersten Profil 10 sicher verspannt. Daraufhin wird das zweite Profil 30 in einem Winkel von 90° zum ersten Profil 10 auf die Basis 51 mit seinem Aufnahmeabschnitt 32 aufgesetzt bzw. aufgeschoben.

Das Aufsetzen des zweiten Profils 30 erfolgt derart, dass Durchgangsöffnungen 34 mit korrespondierenden Durchgangsöffnungen 51 a, 51a der Basis 51 des Profilverbinders 50 fluchten.

Zusätzlich kann eine Klemmfeder 80, auf die später eingegangen wird, in den Anbringabschnitt 31 des zweiten Profils 30 derart eingesetzt werden, dass Durchgangsöffnungen 81 a, 81 a eines Befestigungsabschnitts 81 der Klemmfeder 80 mit korrespondierenden Durchgangsöffnungen 34 des zweiten Profils 30 fluchten.

Nun werden, gemäß Figur 9A zwei, Befestigungsschrauben 1, 1 durch eine jeweilige Durchgangsöffnungsanordnung (81a,) 34, 51a hindurch in einen jeweiligen Schraubkanal 11 e des ersten Profils 10 eingeschraubt. Damit sind alle Teile (80,) 30, 50 sicher am ersten Profil 10 befestigt und können so zwei Seiten eines Rahmens für beispielsweise einen Glasflügel bilden.

Abschließend kann noch ein Seitendichtungsprofil 24 mittels seines Befestigungsteils 25 stirnseitig in das zweite Profil 30 in Endabschnitte der Wandabschnitte 31 b, 31 b des zweiten Profils 30 eingeschoben werden. Der Befestigungsteil 25 weist Anbringabschnitte 25a, 25a in Form von Vorsprüngen auf, die so ausgebildet sind, dass sie in Nuten der Endabschnitte der Wandabschnitte 31 b, 31 b eingreifen.

Die Klemmfeder 80 weist im Wesentlichen zwei Schenkel auf. Ein Schenkel bildet den vorstehend angegebenen Befestigungsabschnitt 81, der einem Anbringen der Klemmfeder 80 an einem Profil 10, 30 dient. An den Befestigungsabschnitt 81 schließt sich ein Schenkel 82 an, der am Befestigungsabschnitt 81 angeformt ist und sich von diesem in einem spitzen Winkel weg erstreckt. Der Schenkel 82 weist vorzugsweise Sperrabschnitte 82a, 82a auf. Die Sperrabschnitte 82a, 82a sind im gezeigten Beispiel mittels zweier Nasen beziehungsweise Vorsprünge gebildet, die vom Schenkel 82 in eine Richtung vom Befestigungsabschnitt 81 weg abknickend ausgebildet sind. Beim vorher beschriebenen Aufschieben des Seitendichtungsprofils 24 auf das zweite Profil 30 kommt eine der Klemmfeder 80 zugewandte Fläche des Befestigungsteils 25 mit den Vorsprüngen 82a, 82a in Kontakt. Dabei kann das Seitendichtungsprofil 24 weiterhin nach oben in Figur 9A geschoben werden. Eine Abwärtsbewegung des Seitendichtungsprofils 24 wird verhindert, indem sich die Vorsprünge 82a, 82a mit besagter Fläche des Befestigungsteils 25 verkanten. Die Klemmfeder 80 bietet somit eine einfache Möglichkeit für einen Herausfallschutz für ein Seitendichtungsprofil 24, wobei das Seitendichtungsprofil 24 auch wieder entfernt werden kann, indem es in Figur 9A nach oben aus dem zweiten Profil 30 heraus gezogen wird.

Figur 9B zeigt die Teile von Figur 9A im Montagezustand.

Im in Figuren 9A und 9B gezeigten Beispiel wirken die Profile 10, 30 im Montagezustand für einen Betrachter von außen rechteckig. Allerdings gibt es Profilverbindungen, bei denen zwei miteinander verbundene Profile mit im Wesentlichen in einem Winkel von 45° zu einer Längserstreckung des jeweiligen Profils abgeschrägten Stirnflächen aneinander stoßen, was bei einem vollständigen Rahmen zu einem optisch stimmigen Gesamteindruck führt.

Gemäß einer anderen, in Figuren 9C und 9D gezeigten Variante sind zu dem Zweck Seitenwände 11 b, 12a und 31 b, 32a zweier miteinander zu verbindender Profile 10, 30 in Bezug auf deren jeweilige Längserstreckung abgeschrägt. Dabei stehen die Seitenwände 11 b, 12a über der Stirnfläche des ersten Profils 10 hervor, wohingegen die Seitenwände 31 b, 32a des zweiten Profils 30 in Bezug auf die vorherigen Ausführungsformen dreieckige Ausschnitte aufweisen. Dadurch ist es möglich, die Profile 10, 30 weiterhin wie beschrieben mittels Profilverbindern 50, 60, 70 zusammenzusetzen. Die optische Wirkung ist im Ergebnis analog der mittels der vorstehend beschriebenen abgeschrägten Stirnflächen realisierten Wirkung.

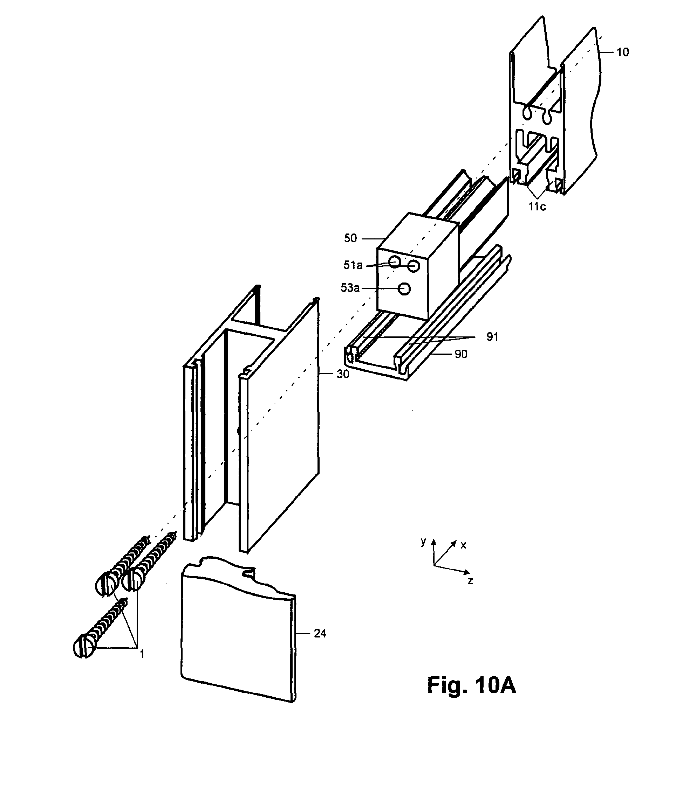

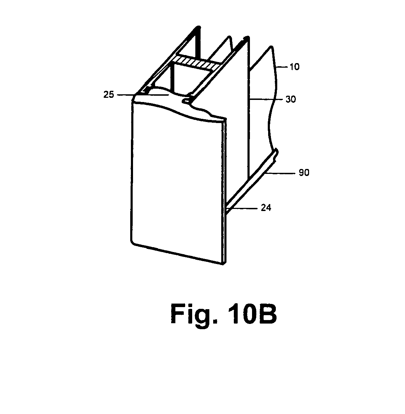

Figur 10 zeigt exemplarisch für den Profilverbinder 50 das Verbinden des ersten Profils 10 mittels des Profilverbinders 50 mit einem zweiten Profil 30 nunmehr in einem unteren Bereich des vorgenannten Rahmens. Das erste Profil 10 und der erste Profilverbinder 50 sind im Gegensatz zu Figur 9 um 180° um die x-Koordinatenachse rotiert angeordnet. Im Gegensatz zu Figur 9A wird hier keine Klemmfeder 80 angebracht. Allerdings ist es ohne Probleme möglich, eine derartige Klemmfeder 80 analog zu Figur 9A am zweiten Profil 30 anzubringen. Zusätzlich zum Profilverbinder 50 wird ein Abdeckprofil 90 mit Führungsabschnitten 91, 91 in Endabschnitte 11 c, 11 c des ersten Profils 10 eingeschoben. Danach erfolgt die Montage des zweiten Profils 30 und des Seitendichtungsprofils 24 im Wesentlichen analog der Beschreibung zu Figur 9A.

Die Durchgangsöffnung 53a des Profilverbinders 50 weist im gezeigten Beispiel einen Durchmesser auf, der im Wesentlichen einem Durchmesser der Durchgangsöffnungen 51 a des Profilverbinders 50 entspricht. D. h. die erste Befestigungsschraube 1 wird nicht gemäß Figur 9A direkt nach dem Einschieben des Profilverbinders 50 in das erste Profil 10 eingeschraubt sondern erst, nachdem auch das zweite Profil 30 entsprechend positioniert ist, dann zusätzlich durch eine entsprechende, zusätzliche Durchgangsöffnung 34 im zweiten Profil 30 durch die Durchgangsöffnung 53a in den Vorsprung 53 hinein.

Figur 10A zeigt die Anordnung aller Teile in Explosionsansicht, wohingegen Figur 10B die Anordnung im Montagezustand zeigt.

Anstelle des Einschiebens des Abdeckprofils 90 kann es auch der Montage des zweiten Profils am ersten Profil 10 nachfolgend von unten in das erste Profil 10 geklipst werden, sofern die Abschnitt 91, 91 dies zulassen. Dies kann beispielsweise dadurch erfolgen, dass die Führungsabschnitte 91, 91 keinen rechteckigen Querschnitt sondern einen Querschnitt in Form eines in Figur 10A aufrecht stehenden Dreiecks aufweisen.

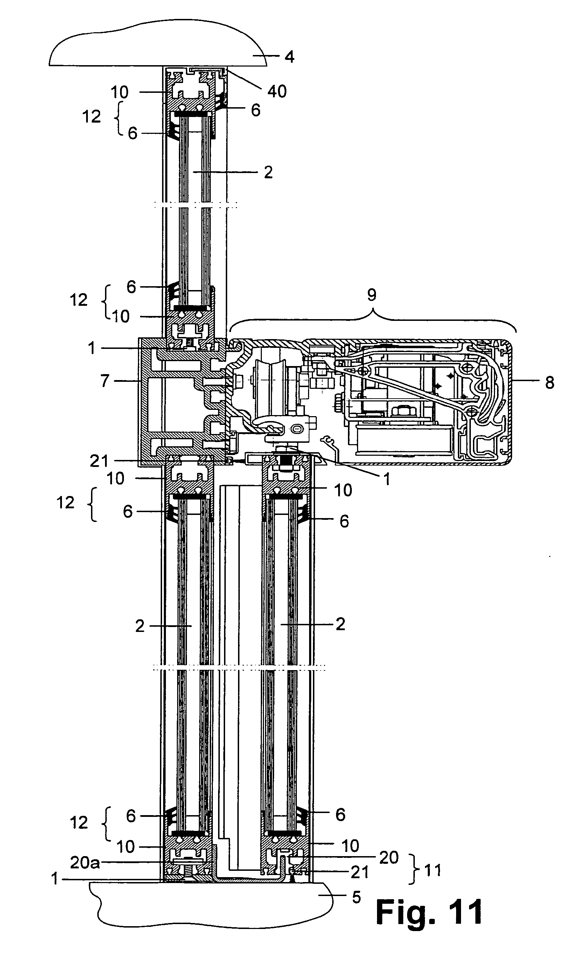

Figur 11 zeigt eine Anwendung des erfindungsgemäßen Profilsystems bei einer Schiebetürenanlage. Die Schiebetürenanlage umfasst zwei feststehende Flügel, nachstehend Festflügel genannt, die in Figur 11 links angeordnet sind. Der obere Festflügel ist mittels eines oberen ersten Profils 10 an einer Decke 4 ortsfest angebracht. Der obere Festflügel ist mittels seines unteren ersten Profils 10 an einem Verbindungsprofil 7 angebracht. An einer Unterseite des Verbindungsprofils 7 schließt sich ein oberes erstes Profil 10 des linken unteren Festflügels an. Ein unteres erstes Profil 10 des linken unteren Festflügel ist mittels Befestigungsschrauben 1 an einem nicht näher bezeichneten Boden-Befestigungsteil befestigt, das seinerseits an einem Boden 5 ortsfest angebracht ist.

Jeweils ein Flügel 2 beispielsweise aus Glas ist vorzugsweise mittels Dichtungen 6 in einen jeweiligen Aufnahmeabschnitt 12, 32 eines jeweiligen Profils 10, 30 eingesetzt, von denen jeweils nur die horizontal verlaufenden, ersten Profile 10 dargestellt sind.

Rechts neben dem linken unteren Festflügel ist ein Schiebetür-Fahrflügel angeordnet, der ebenfalls mittels zweier erster Profile 10, 10 und nicht dargestellter zweiter Profile 30 sowie eines Festflügels gebildet ist. Am unteren ersten Profil 10 des linken Festflügels ist ein Führungsprofil 20 ortsfest angebracht. Das Führungsprofil 20 ist im Querschnitt im Wesentlichen U-förmig ausgebildet und liegt mit einem Schenkel an dem linken unteren ersten Profil 10 an. Der andere Schenkel des Führungsprofils 20 steht mit dem Anbringabschnitt 11 des unteren ersten Profils 10 des Fahrflügels in Gleit-Führungs-Wirkverbindung. Die Anordnung des Führungsprofils 20 im unteren ersten Profil 10 des Fahrflügels entspricht im Wesentlichen der Anordnung links in Figur 2B. Das Führungsprofil 20 weist eine Ausnehmung auf, in das das vorbeschriebene Verbindungsteil 20a eingesetzt ist. Das Verbindungsteil 20a weist im Querschnitt im Wesentlichen die Form eines U auf. Ein Schenkel des Verbindungsprofils 20a ist in das Führungsprofil 20 eingesetzt. Der andere Schenkel ist mit dem unteren Festflügel der Schiebetürenanlage ortsfest verbunden. Im in Figur 11 gezeigten Beispiel erfolgt diese ortsfeste Verbindung mittels einer Senkkopfschraube 1, die einen Block am unteren erste Profil 10 des Fahrflügels arretiert, an dem das Verbindungsteil 20a ortsfest angebracht ist beziehungsweise mit dem es einstückig ausgebildet ist.

Der Fahrflügel ist mittels seines oberen ersten Profils 10 mit einem Linearantrieb wirkverbunden. Der Linearantrieb bildet einen Antriebsabschnitt 9 für den Fahrflügel. Der Antriebsabschnitt 9 ist in einem Tragprofil untergebracht. Der Fahrflügel ist mit seinem oberen ersten Profil 10 vorzugsweise wiederum mittels einer Schraube 1 mit einem Mitnehmer beziehungsweise einem Laufwagen wirkverbunden, der in einer Führungsschiene des Antriebsabschnitts 9 frei rotierbar gelagert aufgenommen ist. Die Führungsschiene ist im in Figur 11 gezeigten Beispiel mittels eines Abschnitts des Tragprofils selbst gebildet.

Wie Figur 11 zeigt, kann mit dem genannten Profilsystem jede Art von Rahmensystem realisiert werden, wobei die Montage der Profile untereinander enorm einfach ist.

Das Verbindungsprofil 7 ist auf das obere Profil 10 des unteren Festflügels aufgesetzt. Der obere Festflügel ist mittels seines unteren Profils 10 in das Verbindungsprofil 7 eingesetzt. Mittels einer Schraube 1 ist der obere Festflügel gegen das Verbindungsprofil 7 verspannt. Dies erfolgt im gezeigten Fall dadurch, dass eine Schraube 1 in einen Bolzen eingeschraubt ist, der in dem Anbringabschnitt 11 des unteren Profils 10 des ortsfesten Flügels 2 eingesetzt ist. Mittels Verdrehens der Schraube 1 bzw. des Bolzens wird der Kopf der Schraube 1 aus diesem ersten Profil 10 heraus und somit gegen das Verbindungsprofil 7 bewegt.

Das obere erste Profil 10 des oberen Festflügels ist vorteilhafterweise in ein Abschlussprofil 40 eingeschoben, das seinerseits an der Decke 4 ortsfest angebracht ist.

Das untere erste Profil 10 des unteren Festflügels ist vorzugsweise mit dem Boden 5 ortsfest verbunden. Alternativ ist der untere Festflügel mittels der beschriebenen Schraube 1 mit dem Boden 5 lediglich verspannt.

Das Verbindungsprofil 7 dient im in Figur 11 gezeigten Beispiel neben dem Verspannen der beiden Festflügel zusätzlich einem Anbringen eines Antriebsabschnitts 9 eines Linearantriebs zum Bewegen zumindest eines Schiebetüranlagen-Fahrflügels. Der Antriebsabschnitt 9 besteht im Wesentlichen aus einem in Figur 11 nicht näher bezeichneten Tragprofil. In bzw. an dem Tragprofil sind alle Komponenten des Linearantriebs für den zumindest einen Fahrflügel aufgenommen bzw. angebracht. Ferner ist an dem Tragprofil ein Blendenprofil 8 angebracht, das den Linearantrieb nach außen hin optisch verdeckt.

Die Erfindung ist nicht auf die vorstehend beschriebenen Ausführungen beschränkt.

Beispielsweise können die Ausnehmungen 61 b des Profilverbinders 60 bei den Profilverbindern 50, 70 ausgebildet sein. Dies gilt analog für den Schlitz 71 b des Profilverbinders 70 hinsichtlich der Profilverbinder 50, 60. Die beschriebenen Einführungsabschnitte 62a bzw. 72a können ohne weiters auf die jeweils anderen Profilverbinder 50, 70 bzw. 50, 60 angewendet werden. Die in Bezug auf den Profilverbinder 50 beschriebene im Bereich der Basis 51 mit vergrößertem Innendurchmesser ausgebildete Durchgangsöffnung 53a ist auf jeden anderen der beschriebenen Profilverbinder 60, 70 anwendbar.

Die in Bezug auf das zweite Profil 30 beschriebenen Durchgangsöffnungen 34 können gleichfalls an der Basis 11a eines jeweiligen ersten Profils 40 ausgebildet sein. Dies kann dadurch realisiert sein, dass die vorbeschriebenen Innenwandabschnitte 11 d im Bereich der Durchgangsöffnungen unterbrochen sind. Dadurch ist es möglich, die Rahmen lediglich mittels eines Profils einer einzigen Sorte zu montieren, was zu einer weiteren Minimierung unterschiedlich herzustellender Teile für das Profilsystem führt.

Die in Figur 11 gezeigte Schiebetüranlage ist nur exemplarisch. Die Erfindung ist auf jedes mit einem Rahmen zu versehene Teil anwendbar.

Auch ist das vorgenannte Profilsystem nicht auf rechteckige Rahmen beschränkt. Für einen Winkel zwischen zwei Profilen von beispielsweise 120° ist eine jeweilige Stirnfläche jedes Profils und des jeweiligen Profilverbinders in Bezug auf dessen jeweilige Längserstreckung jeweils um 180° - 120°, also in besagtem Fall jeweils um 60° abgeschrägt ausgeführt. Die Durchgangsöffnungen erstrecken sich durch die Basis des jeweiligen Profils in jedem Fall parallel zur jeweils nahe gelegenen abgeschrägten Stirnfläche. D. h. im Fall einer 120°-Anbindung würden die jeweiligen endseitigen Anordnungen von Durchgangsöffnungen zueinander in einem Winkel von 2 - 60°, d. h. 120°, verlaufend ausgebildet sein. In dem Fall sind die den Vorsprüngen abgewandten Seiten der Basis eines jeweiligen Profilverbinders vorzugsweise schräg verlaufend ausgebildet.

Insgesamt bietet das vorstehend beschriebene Profilsystem eine einfach preiswerte Möglichkeit, universell Rahmenflügel herzustellen, die bei verschiedenen Anwendungen zum Einsatz kommen können.

### Bezugszeichenliste

- 1: Befestigungsschraube
- 2: Flügel
- 3: Wand
- 4: Decke
- 5: Boden
- 6: Dichtung
- 7: Verbindungsprofil
- 8: Blendenprofil
- 9: Antriebsabschnitt

- 10: erstes Profil
- 11: Anbringabschnitt
- 11a: Basis
- 11b: Wandabschnitt
- 11c: Endabschnitt
- 11d: Innenwandabschnitt
- 11e: Schraubkanal
- 12: Aufnahmeabschnitt
- 12a: Wandabschnitt

- 20: Führungsprofil
- 20a: Verbindungsteil
- 21: Bürstendichtung
- 22: Bodenschiene
- 23: Mitteldichtungsprofil
- 23a: Befestigungsabschnitt
- 23b: Ausschnitt
- 24: Seitendichtungsprofil
- 24a: Dichtungslippe
- 25: Befestigungsteil
- 25a: Anbringabschnitt

- 30: zweites Profil
- 31: Anbringabschnitt
- 31 a: Basis
- 31 b: Wandabschnitt
- 32: Aufnahmeabschnitt
- 32a: Wandabschnitt
- 33: Durchgangsöffnung
- 34: Durchgangsöffnung
- 35: Ausnehmung

- 40: Abschlussprofil
- 41: Basis
- 41 a: Befestigungsöffnung
- 42: Schenkel

- 50: Profilverbinder
- 51: Basis
- 51 a: Durchgangsöffnung
- 52: Vorsprung
- 53: Vorsprung
- 53a: Durchgangsöffnung
- 53b: Schlitz

- 60: Profilverbinder
- 61: Basis
- 61 a: Durchgangsöffnung
- 61b: Ausnehmung
- 62: Vorsprung
- 62a: Einführungsabschnitt

- 70: Profilverbinder
- 71: Basis
- 71 a: Durchgangsöffnung
- 71 b: Schlitz
- 72: Vorsprung
- 72a: Einführungsabschnitt

- 80: Klemmfeder
- 81: Befestigungsabschnitt
- 81 a: Durchgangsöffnung
- 82: Schenkel
- 82a: Sperrabschnitt

- 90: Abdeckprofil
- 91: Führungsabschnitt

- x: Koordinatenrichtung
- y: Koordinatenrichtung
- z: Koordinatenrichtung

## Patentansprüche

1. Profil (10) aufweisend einen ersten Anbringabschnitt (11), umfassend
• eine erste Basis (11a),
• zwei erste Wandabschnitte (11 b, 11 b), die
- von der ersten Basis (11 a) abgehen,
- sich in eine erste Richtung (+z) quer zu einer Längserstreckung des Profils (10) erstrecken, wobei ein so zwischen der ersten Basis (11a) und den ersten Wandabschnitten (11 b, 11 b) gebildeter Innenraum des Profils (10) eine im Querschnitt unrunde Innenkontur aufweist, und
- an ihren freien Enden Abschnitte (11 c, 11 c) aufweisen, die von den freien Enden der ersten Wandabschnitten (11 b, 1 1 b) abgehend einander zugewandt ausgebildet sind, und
• zumindest einen Innenwandabschnitt (11d), der
- von der ersten Basis (11 a) abgeht,
- sich im Wesentlichen in die erste Richtung (+z) erstreckt und
- in dem Innenraum des Profils (10) zu den ersten Wandabschnitten (11 b, 11 b) jeweils im Abstand angeordnet ist.

2. Profil (10) gemäß Anspruch 1, wobei sich der zumindest eine Innenwandabschnitt (11b) über eine gesamte Länge des Profils (10) erstreckt.

3. Profil (10) gemäß einem der vorhergehenden Ansprüche, ferner aufweisend zumindest einen Kanal (11 e), der
• in bzw. an der ersten Basis (11a) ausgebildet ist und
• sich von einer Stirnseite des Profils parallel zu einer Längserstreckung des Profils (10) erstreckt.

4. Profil (10) gemäß Anspruch 3, wobei sich der zumindest eine Kanal (11e) über eine gesamte Länge des Profils (10) erstreckt.

5. Profil (10) gemäß einem der vorhergehenden Ansprüche, ferner aufweisend einen ersten Aufnahmeabschnitt (12), umfassend zwei zweite Wandabschnitte (12a, 12a), die
• von der ersten Basis (11) abgehen und
• sich in eine zu der ersten Richtung (+z) entgegengesetzte Richtung (-z) erstrecken.

6. Profilsystem, umfassend:
• zumindest ein erstes Profil (10) gemäß einem der vorhergehenden Ansprüche,
• zumindest ein zweites Profil (30), aufweisend einen zweiten Anbringabschnitt (23a, 31, 41), der
- eine zweite Basis (23, 31 a, 41 a) und
- zwei dritte Wandabschnitte (31 b, 41 b) umfasst, die
• von der zweiten Basis (23, 31 a, 41 a) abgehen und
• sich quer zu einer Längserstreckung des zumindest einen zweiten Profils (30) in eine zweite Richtung (+x) erstrecken, und
• zumindest einen Profilverbinder (50, 60, 70), aufweisend
- eine dritte Basis (41, 51, 61) und
- zumindest einen elastisch verformbaren Vorsprung (52, 62, 72), der von der dritten Basis (51, 61, 71) abgeht und sich in eine Richtung (+x) erstreckt,
- wobei, im Montagezustand,
• der zumindest eine Vorsprung (52, 62, 72) in den ersten Anbringabschnitt (11) des zumindest einen Profils (10) eingeschoben ist und sich gegen korrespondierende Flächen des ersten Anbringabschnitts (11) verspannt,
• der zumindest eine Profilverbinder (50, 60, 70) mit der ersten Basis (51, 61, 71) an dem zumindest einen ersten Profil (10) anstößt und
• das zumindest eine zweite Profil (30, 40) mit seinem zweiten Anbringabschnitt (23a, 31, 41) auf die erste Basis des Profilverbinders (50, 60, 70) aufgesetzt ist und zumindest an der ersten Basis (51, 61, 71) des zumindest einen Profilverbinders (50, 60, 70) ortsfest angebracht ist.

7. Profilsystem gemäß Anspruch 6, wobei der zweite Anbringabschnitt (31) ferner vierte Wandabschnitte (32a) aufweist, die
• von der zweiten Basis (31 a) abgehen und
• sich in eine zu der zweiten Richtung (+x) entgegengesetzten Richtung (-x) erstrecken.

8. Profilsystem gemäß Anspruch 6 oder 7, wobei das zumindest eine zweite Profil (20) ferner ein Befestigungsteil (25) umfasst, das
• dem Befestigen des zumindest einen zweiten Profils (20) an dem zumindest einen ersten Profil (30, 40) dient, und
• einen ersten Abringabschnitt (25a) aufweist, der einem Anbringen des zweiten Anbringabschnitts (23a) an dem Befestigungsteil (25) dient.

9. Profilsystem gemäß einem der Ansprüche 6 bis 8, wobei der zumindest eine Profilverbinder (50) zumindest eine Durchgangsöffnung (51a, 53a) aufweist, die sich entlang einer Erstreckungsrichtung der zumindest zwei Vorsprünge (52, 52; 62, 62; 72, 72) des zumindest einen Profilverbinders (50) erstreckt.

10. Profilsystem gemäß Anspruch 9, wobei die zweite Basis (31 a, 41 a) des zumindest einen zweiten Profils (30, 40) zumindest eine Durchgangsöffnung (33, 34, 35; 41a) aufweist, die im Montagezustand mit einer der zumindest einen Durchgangsöffnung (51 a, 53a) des zumindest einen Profilverbinders (50) fluchtet.

11. Profilsystem gemäß Anspruch 10, wobei die zumindest eine Durchgangsöffnung (33, 34, 35) des zumindest einen zweiten Profils (30, 40) einen Querschnitt in Form eines Kreises, eines Langlochs oder im Wesentlichen einer Außenkontur einer 8 hat.

12. Profilsystem, umfassend
• zumindest ein erstes Profil (10, 30),
• zumindest ein zweites Profil (30), das gemäß dem zweiten Profil (30) gemäß einem der Ansprüche 6 bis 8 ausgebildet ist, und
• zumindest ein Sicherungsteil (80) mit
- einem Anbringabschnitt (81), das einem Befestigen des zumindest einen Sicherungsteils (80) an dem zumindest einen ersten Profil (10, 30) dient, und
- einen Sperrabschnitt (82), der derart an dem Anbringabschnitt (81) angebracht oder mit dem Anbringabschnitt (81) einstückig ausgebildet ist, dass
• eine dem Anbringabschnitt (81) abgewandte erste Fläche des Sperrabschnitts (82) in einem vorbestimmten, spitzen Winkel zu einer der ersten Fläche im Wesentlichen entgegengesetzt gerichteten, dem zumindest einen ersten Profil (10) zugewandten, zweiten Fläche verläuft und
• der Sperrabschnitt (82) in einem vorbestimmten Maß elastisch auf den Anbringabschnitt (81) zu und von ihm weg bewegbar ist.

13. Profilsystem gemäß Anspruch 12, wobei das zumindest eine erste Profil (10) gemäß einem der Ansprüche 1 bis 5 ausgebildet ist.

14. Profilsystem gemäß Anspruch 12, wobei das zumindest eine erste Profil (30, 40) gemäß dem zweiten Profil (30, 40) gemäß einem der Ansprüche 6 bis 8 ausgebildet ist.

15. Profilsystem gemäß einem der Ansprüche 6 bis 14, ferner aufweisend zumindest ein zweites Profil, das gemäß dem zweiten Profil (30) gemäß einem der Ansprüche 6 bis 8 ausgebildet ist.

16. Profilsystem gemäß einem der Ansprüche 6 bis 15, ferner umfassend:
• zumindest ein drittes Profil (20), wobei
- das zumindest eine dritte Profil (20) im Montagezustand in das zumindest eine zweite Profil (10) eingeklipst oder auf dieses aufgeschoben ist und
- zwischen dem zumindest einem zweiten Profil (10) und dem zumindest einem dritten Profil (20) ein Hohlraum besteht, und
• zumindest ein erstes Sicherungsteil (80) gemäß einem der Ansprüche 12 bis 14, das in dem Hohlraum derart angeordnet ist, dass es
- mit dem Anbringabschnitt (81) an dem zumindest einen zweiten Profil (10) anliegt,
- mit dem Sperrabschnitt (82) das zumindest eine dritte Profil (20) von dem zumindest einen zweiten Profil (10) mit einer vorbestimmten Vorspannung weg drückt und
- die erste Fläche des Anbringabschnitts (81) des zumindest einen ersten Sicherungsteils (80) derart ausgerichtet ist, dass sie in Richtung einer Sicherung des zumindest einen dritten Profils (20) in Richtung jeweiliges zweites Profil (10) geneigt ist.

17. Profilsystem gemäß Anspruch 16, umfassend zumindest ein zweites Sicherungsteil (80) gemäß einem der Ansprüche 12 bis 16, das derart im Hohlraum zwischen den Profilen (10, 20) angeordnet ist, dass die erste Fläche des Anbringabschnitts (81) des zumindest einen zweiten Sicherungsteils (80) derart ausgerichtet ist, dass sie entgegen der Sicherungsrichtung des jeweiligen dritten Profils (20) in Richtung jeweiliges zweites Profil (10) geneigt ist.

18. Profilsystem gemäß Anspruch 16 oder 17, wobei, im Querschnitt gesehen,
• die Wandabschnitte (10a) des zumindest einen zweiten Profils (10) an der Basis (10b) abgewandten Enden jeweils eine Führung (10c) aufweisen, die sich entlang einer Längserstreckung des zumindest einen zweiten Profils (10) erstrecken und über eine gemeinsame Länge zueinander einen nahezu konstanten Abstand aufweisen, und
• das zumindest eine dritte Profil (20)
- einen Einsatzabschnitt (21), der zu den Führungen (10c) komplementär ausgebildete Abschnitte (21 a) umfasst, sodass das das zumindest eine dritte Profil (20) mit den Abschnitten (21a) in die Führungen (10c) eingeschoben ist und mit ihnen in Berührungskontakt steht, und
- einen Abdeckabschnitt (22) aufweist, der an den der Basis (10b) abgewandten Enden der Wandabschnitte (10a) anliegt und damit das das zumindest eine zweite Profil (10) abdeckt.

19. Profilsystem gemäß einem der Ansprüche 6 bis 11, aufweisend für jede Verbindung zwischen dem zumindest einen ersten Profil (10) und dem zumindest einen zweiten Profil (30, 40) jeweils einen Profilverbinder (50, 60, 70) gemäß einem der Ansprüche 6 bis 9.

20. Verfahren zum Montieren eines ersten Profils (10) an ein zweites Profil (10, 30) gemäß einem der vorstehenden Ansprüche mit einem zweiten Profil (10, 30) gemäß einem der vorhergehenden Ansprüche, aufweisend die Schritte:
• Einschieben eines Profilverbinders (50, 60, 70) mit seinen Vorsprüngen (52, 53; 62; 72) in eine Stirnseite des ersten Profils (10) in den ersten Anbringabschnitt (11) des ersten Profils (10),
• Aufsetzen des zweiten Profils (10, 30) mit seinem Aufnahmeabschnitt (12, 32) auf die Basis (51, 61, 71) des Profilverbinders (50, 60, 70) in einem vorbestimmten Winkel zum ersten Profil (10), der größer als 0° beträgt,
• Einschrauben von Befestigungsschrauben (1) durch Durchgangsöffnungen (33, 34) des zweiten Profils (10, 30) hindurchgehend in Durchgangsöffnungen (51a, 53; 61 a; 71 a) des Profilverbinders (50, 60, 70).

21. Verfahren gemäß Anspruch 20, wobei dem Schritt des Einschiebens nachfolgend der zusätzliche Schritt ausgeführt wird:
• Einschrauben einer Befestigungsschraube (1) in die Durchgangsöffnung (53) des Profilverbinders (50).

22. Verfahren zum Montieren eines Rahmens, aufweisend für jede Verbindung zwischen zwei Profilen (10, 30) gemäß einem der Ansprüche 6 bis 19, jeweils Ausführen des Verfahrens gemäß Anspruch 20 oder 21.
